Europäisches Patentamt

European Patent Office

Office européen des brevets

(11) Veröffentlichungsnummer: **0 147 359**
**A2**

(12) **EUROPÄISCHE PATENTANMELDUNG**

(21) Anmeldenummer: **84730135.5**

(22) Anmeldetag: **06.12.84**

(51) Int. Cl.⁴: **G 02 F 1/31**
**G 02 B 6/28**

(30) Priorität: **06.12.83 DE 3344490**

(43) Veröffentlichungstag der Anmeldung:
**03.07.85 Patentblatt 85/27**

(84) Benannte Vertragsstaaten:
**AT BE CH DE FR GB IT LI LU NL SE**

(71) Anmelder: **Heinrich-Hertz-Institut für Nachrichtentechnik Berlin GmbH**
**Einsteinufer 37**
**D-1000 Berlin 10(DE)**

(72) Erfinder: **Heidrich, Helmut, Dr.-Ing.**
**Schneeballenweg 18**
**D-1000 Berlin 47(DE)**

(72) Erfinder: **Hoffmann, Detlef, Dr.-Ing.**
**Lüdtgeweg 14**
**D-1000 Berlin 10(DE)**

(74) Vertreter: **Wolff, Konrad**
**Heinrich-Hertz-Institut für Nachrichtentechnik Berlin GmbH Einsteinufer 37**
**D-1000 Berlin 10(DE)**

(54) **Wellenleiter-Schaltmatrix.**

(57) Elektrisch steuerbare, integriert-optische Schalterelemente lassen sich in hoher Packungsdichte zu einer Kaskade zusammenfügen, für die nur zwei Grundtypen (A, B) von Wellenleiterzellen benötigt werden. Der eine Grundtyp (A) ist ein Wellenleiter-Schalterelement mit der Länge x und der Breite y. Er ist – wie auch der andere Grundtyp (B) – an seinen Längsseiten mit optisch isolierenden Ätzgräben (1) versehen. An den Querseiten der Zellen haben alle Anschlußstellen der Wellenleiter (2.1, 2.2, 2.3) untereinander denselben Abstand y/2. Der andere Grundtyp (B) ist ein Ein-Wellenleiter-Verbindungselement. Mit ihm werden die durch den Versatz der Schaltelementzellen (A) um y/2 die verbleibenden Lücken ausgefüllt.

Fig. 1

Fig. 2

**0147359**

HEINRICH-HERTZ-INSTITUT FÜR NACHRICHTENTECHNIK BERLIN GMBH

12/1283 EP

Wellenleiter-Schaltmatrix

Die Erfindung bezieht sich auf eine Wellenleiter-Schaltmatrix mit elektrisch steuerbaren, kaskadierten, integriert-optischen Schalterelementen, bei der die zu Monomodefaseranschlüssen führenden Wellenleiter im Eingangs- und im Ausgangsbereich der Matrix gespreizt, innerhalb eines Schalterelements eng nebeneinander und zwischen längsseitig benachbarten Schalterelementen voneinander entkoppelt verlaufen.

Hierbei wird von einem Stand der Technik ausgegangen, wie er aus "IEEE Journal of Quantum Electronics" Vol. QE-18, No. 10, Okt.1982, Seiten 1759 bis 1765, bekannt ist. Bezüglich einer hohen Integrationsdichte sind danach die Grenzen durch Abstrahlverluste an Verbindungs-Wellenleitern zwischen Schalterelementen und an gekrümmten Wellenleitern im Eingangs- und Ausgangsbereich, durch die notwendigen relativ langen Verbindungen zwischen den Schalterebenen sowie durch das Nebensprechen vorgegeben. Für eine 4 x 4-Schaltmatrix mit drei Schalterebenen ergibt sich eine rechnerische Mindestlänge von 35 mm, nämlich jeweils 5 mm für den Eingangs- und den Ausgangsbereich, 3 x 3 mm für die Schalterlängen und 2 x 8 mm für die Verbindungen zwischen den drei Schalterebenen.

Aus "Applied Optics" Vol. 18 No. 4, 15. Feb. 1980, Seiten 510 bis 515 sind auch 3 x 3-Schalterelemente bekannt. Diese eignen sich jedoch schlecht zur Kaskadierung und zum Aufbau von Schaltmatrizen mit einer größeren Zahl von Eingängen und Ausgängen.

Für den Aufbau von Modulatoren oder Schaltern als integriert-optische Bauelemente ist eine interessante Lösung aus "Appl. Phys. Lett." 35(1), 1. Jul. 1979, Seiten 40 bis 42 bekannt. Danach ist es möglich, zwischen zwei geradlinig verlaufenden Wellenleitern einen ionengeätzten Schlitz vorzusehen, der die beiden geführten optischen Wellen vollständig voneinander isoliert. Wenn ein solcher Bereich zwischen zwei 3 dB-Kopplern vorgesehen ist und dort die Phasen der Wellen entsprechend gedreht werden, gelangt - je nach Ansteuerung dieses Phasenschiebers - eine dem ersten Koppler zugeführte Welle je nach Steuerzustand entweder auf den Ausgang 1 oder 2 hinter dem zweiten Koppler. Es sind damit also die Zustände "aus" oder"kreuzen" bzw. "an" oder "parallel" zu erreichen. Dieses Bauelement hat dann eine Gesamtlänge von knapp 21 mm.

Die Aufgabenstellung der Erfindung besteht darin, eine Wellenleiter-Schaltmatrix zu schaffen, bei der auf einem Chip vorgegebener Länge eine im Vergleich zum eingangs erwähnten bekannten Stand der Technik höhere Anzahl von Kaskadenstufen untergebracht werden kann. Gemäß der Erfindung wird dies gelöst durch eine Kaskade mit der Länge $n \cdot x$ und der Breite $m \cdot y$ in der Matrix, die aus zwei Grundtypen rechteckiger, unmittelbar aneinander gepackter Wellenleiterzellen aufgebaut ist, von denen:

- der eine Grundtyp als ein Wellenleiter-Schalterelement mit der Länge x und der Breite y ausgebildet und an seinen Längsachsen mit optisch isolierenden Ätzgruben versehen ist, und die Wellenleiter an den Querseiten dieser Zelle den Abstand y/2 voneinander und y/4 von der Mittelachse haben und

- der andere Grundtyp als ein Ein-Wellenleiter-Verbindungselement mit der Länge x und der Breite y/2 ausgebildet und an seinen Längsseiten mit optisch isolierenden Ätzgruben versehen ist, und der Wellenleiter in dieser Zelle geradlinig und entlang seiner Mittelachse verläuft.

Die Länge x, bei beiden Grundtypen identisch, richtet sich in erster Linie nach der Art des Wellenleiter-Schalterelements und beträgt zwischen 2 mm und 5 mm. Infolge der vorgegebenen Abmessungen von Monomodefasern müssen die Anschlüsse am Eingang und am Ausgang einen gegenseitigen Abstand von ca. 125 µm bis 150 µm aufweisen, und die Wellenleiter-Zuleitungen zum Matrixfeld benötigen bei ausreichend schwacher Krümmung von der Chiplänge nach wie vor jeweils ca. 5 mm. Für die Wellenleiterzellen entsprechend der erfindungsgemäßen Lösung verbleibt jedoch die gesamte restliche Länge, d.h. auf z. B. 25 mm Länge des Matrixfeldes lassen sich zwischen 5 und 12 Kaskadenstufen unterbringen. Dabei sind im Matrixfeld die Wellenleiter-Schalterelementzellen in Querrichtung von Kaskadenstufe zu Kaskadenstufe jeweils um die Hälfte ihrer Breite gegeneinander versetzt und in Längsrichtung einander unmittelbar benachbart. An den Längsseiten des Matrixfeldes werden die durch den Versatz der Wellenleiter-Schalterelementzellen in jeder zweiten Kaskadenstufe verbleibenden Lücken mit den Ein-Wellenleiter-Verbindungselementzellen ausgefüllt, denn nur dort werden bei der erfindungsgemäßen Lösung noch fehlende Verbindungen zwischen Schalterelementen benötigt.

Diese derart hohe Packungsdichte wird dadurch ermöglicht, daß zur optischen Isolierung der Wellenleiterzellen voneinander - nicht etwa wie beim oben erwähnten Stand der Technik der Wellenleiter innerhalb einer Schalterelementzelle - die Wellenleiterzellen beider Grundtypen an ihren Längsseiten mit Ätzgruben versehen sind. Diese Ätzgruben ermöglichen die geforderte Entkopplung auf kürzestem Wege, ohne den Abstand zwischen den voneinander optisch zu isolierenden Wellenleitern vergrößern zu müssen. Die auf diese Weise eingesparten Längen lassen sich also vollständig für weitere Kaskadenstufen ausnutzen.

Die optisch isolierenden Ätzgräben wirken sich zudem vorteilhaft bezüglich der Nebensprecheigenschaften aus, die ansonsten allein durch derartige konstruktive Maßnahmen kaum beeinflußt werden können. Bezüglich des Übersprechens ist nämlich dahingehend zu unterscheiden, ob dieses innerhalb eines Schalterelements oder zwischen zwei Schalterelementen oder, allgemein, zwischen an sich nicht gekoppelten Wellenleitern auftritt. Im ersten Fall handelt es sich um eine Frage der Kopplergüte, im zweiten Fall um eine Entkopplung, die bei der erfindungsgemäßen Lösung eine wesentliche Rolle spielt.

Eine Schaltmatrix, die beispielsweise für die Vermittlung von optischen, insbesondere breitbandigen Nachrichtenkanälen eingesetzt werden soll, muß blockierungsfrei arbeiten. Das heißt, Nachrichtenkanäle müssen sich von allen ankommenden Leitungen auf die abgehenden Leitungen wahlfrei durchschalten lassen. Bei einer 4 x 4-Matrix mit nur drei Kaskadenstufen ist dies je-

doch nicht möglich. Ist zum Beispiel die 1. ankommende Leitung bereits auf die 4. abgehende Leitung durchgeschaltet, also eine Diagonale belegt, können von der 2. ankommenden Leitung zwar noch die 1. oder die 2. abgehende Leitung, nicht jedoch die 3., an sich noch freie abgehende Leitung erreicht werden. Ist hingegen eine vierte Kaskadenstufe mit einem weiteren Koppler zwischen der 2. und 3. Leitung vorgesehen, läßt sich auch noch diese Verbindung durchschalten. Bei Ausführungsformen der Erfindung sollen deshalb bei einer 4 x 4 - Matrix vier Kakadenstufen vorgesehen sein.

Infolge der möglichen hohen Packungsdichte entsprechend der erfindungsgemäßen Lösung lassen sich beispielsweise auf einem Chip auch Konzentrations- bzw. Expansionsschaltungen mit je drei 4 x 4-Matrizen der oben genannten Art aufbauen. Bei einem Konzentrator mit acht Eingängen und vier Ausgängen können die beiden Eingangsmatrizen direkt benachbart sein, so daß Verbindungsleitungen zur dritten Matrix entfallen können. Damit folgt für den Längenbedarf am Eingang - von den ankommenden Monomodefasern zu den Eingangsmatrizen entsprechend der eingangs schon genannten Vorveröffentlichung IEEE, QE-18 No. 10, dort Fig. 2 auf Seite 1760 - knapp 8 mm, für acht in Längsrichtung unmittelbar benachbarte Kaskadenstufen entsprechend der erfindungsgemäßen Lösung mit einem mittleren Wert von $x = 3,5$ mm hierfür 28 mm und für die Wellenleiterverbindungen zu den abgehenden vier Monomodefasern 5 mm, insgesamt also 41 mm. Dies gilt analog auch für eine Expansionsschaltung. Deren Breiten, vorgegeben durch die Anzahl der Monomodefasern und deren Durchmesser, im genannten Beispiel also 8 x 125 µm, betragen damit 1000 µm.

Bei Ausführungsformen der Erfindung können die Wellenleiter-Schalterelemente beispielsweise als Richtkoppler, als Wellenleiterkreuzung, als aktive optische Weiche oder dergleichen ausgeführt sein. Wichtig dabei ist vor allem, daß die gewünschte optische Schalterfunktion unter Ausnutzung des elektro-optischen Effekts auf kurzer Länge x, wie oben bereits erwähnt ca. $2 \text{ mm} \leq x \leq 5 \text{ mm}$ erzielbar ist.

Vorteilhafte Ausführungsformen der Erfindung können auch mit optisch isolierenden Ätzgruben im Eingangs- und im Ausgangsbereich der Matrix zwischen den dort gespreizt geführten Wellenleitern versehen sein. Derartige Maßnahmen zur optischen Isolierung von Wellenleitern sind natürlich dort von besonderer Bedeutung, wo diese Wellenleiter eng nebeneinander verlaufen, also in der Nähe der Matrixfelder. Solche optisch isolierenden Ätzgruben im Eingangs- und im Ausgangsbereich der Matrix können zudem noch, entsprechend der Spreizung der Wellenleiter, sich dort verbreitern bzw. verjüngen.

Weiter oben ist bereits erwähnt, daß die Breite solcher Wellenleiter-Schaltmatrizen sehr viel geringer ist als deren Länge. Eine Verbreiterung, für sinnvolle zusätzliche Funktionen ausgenutzt, ist dann zweifellos sehr vorteilhaft. Hierzu gehören beispielsweise Wellenleiter, die außerhalb des Matrixfeldes mit den dort kaskadierten Schalterelementen als Prüfleitungen für die Matrix vorbeiführen. Es können auch Wellenleiter-Schalterelemente vorgesehen werden, die jeweils an einen äußeren Wellenleiter des Matrixfeldes und an einen außerhalb des Matrixfeldes vorbeiführenden Wellenleiter angeschlossen sind. Dies ist z. B. für Funktionsprüfungen einer Matrix ohne den Eingriff in die Teilnehmerleitungen sinnvoll.

Der im Eingangs- und Ausgangsbereich zwischen den dort gespreizt geführten Wellenleitern ausreichend zur Verfügung stehende Platz kann noch für weitere, beispielsweise die Betriebssicherheit eines Nachrichtensystems betreffende Aspekte genutzt werden. Um beispielsweise Störungen auf der Teilnehmerebene vom Vermittlungsbereich und damit deren weitere Ausbreitung verhindern zu können, lassen sich dort als Arbeitskontakte wirkende Wellenleiter-Schalterelemente in den einzelnen Wellenleiterbahnen vorsehen. Mit solchen Arbeitskontakten nur im Ausgangsbereich einer Schaltmatrix besteht beispielsweise die Möglichkeit, von einem Vermittlungsrechner gesteuert bestimmte Teilnehmer vom Empfang bestimmter Dienste auszuschließen bzw. nur bestimmte Teilnehmer zum Empfang zuzulassen, d. h. die Abhörsicherheit zu gewährleisten.

Die Bezeichnung der Wellenleiterzellen, aus denen bei einer erfindungsgemäßen Wellenleiter-Schaltmatrix die Kaskaden gebildet sind, als Grundtypen hat ihre Bedeutung nicht nur im Hinblick auf das Verständnis der sprachlichen Beschreibung eines technischen Sachverhalts. Eben dieser Sachverhalt begründet auch die hervorragende Eignung dieses Konzepts für die Realisierung solcher Schaltmatrizen durch rechnergestützte Konstruktion. Am hergestellten Produkt hingegen kommt es nicht mehr darauf an, daß jeder Grundtyp einer Wellenleiterzelle als solcher noch erkennbar ist. Dort ist es weitaus wichtiger, daß kontinuierliche Übergänge zwischen den Wellenleitern bzw. Ätzgruben, die verschiedenen Zellen zuzuordnen sind, funktionsmäßig aber eine Einheit bilden, vorhanden sind. Kontinuierliche Übergänge bei Wellenleitern treten in Längsrichtung, bei Ätzgruben vorwiegend in Querrichtung, zum Teil auch in Längsrichtung auf, wenn sich diese z. B. bis in den Eingangs- bzw. Ausgangsbereich der Matrix hinein erstrecken.

Das Material für die Ausführungsform der Erfindung wird entsprechend der Integrationshöhe und der Wellenlänge des optischen Systems ausgelegt. Für Wellenlängen über ca. 1 µm, z. B. 1,3 µm oder 1,5 µm, eignen sich sowohl Lithiumniobat- (LiNbO$_3$-) als auch Indiumphosphid- (InP-) Verbindungen. Die Wellenlängen 1,3 µm bzw. 1,5 µm sind bisher von der Glasfasertechnologie her wegen der minimalen Dämpfung bzw. Dispersion prädestinierte Bereiche für optische Nachrichten-Systeme. Wird keine monolithische Integration von aktiven Komponenten wie Lasern und Detektoren mit der Schaltmatrix vorgesehen, so bietet sich aus Wirtschaftlichkeitserwägungen und der einfacheren Technologie zur Herstellung der Schaltmatrix Lithiumniobat als Material an. Bei monolithischer Integration von aktiven Komponenten mit der Schaltmatrix werden Halbleitermaterialien wie z. B. Indiumphosphid-Verbindungen notwendig.

Bei Ausführungsformen der Erfindung können die Breite der Wellenleiterbahnen etwa 5 µm, das Abstandsmaß y/2 etwa 3 µm bis 6 µm an den Querseiten der Zellen sowie die Breite der optisch isolierenden Ätzgruben an den Längsseiten der Zellen von 0,5 µm bis 2 µm betragen. Diese Angaben für die Ätzgruben beziehen sich auf die "begriffliche" Breite einer Wellenleiterzelle; dort, wo zwei Zellen längsseitig benachbart sind, ergibt sich eine doppelt so große "funktionelle" Breite. Innerhalb einer als Richtkoppler ausgeführten Wellenleiter-Schalterelementzelle können die Wellenleiter im Koppelbe-

reich beispielsweise auch einen um 1 µm bis 2 µm geringeren Abstand aufweisen als an den Querseiten der Zelle. Dort kann dann auch eine Ätzgrube eine Ausbuchtung haben.

Weitere bevorzugte Ausführungsformen der Erfindung betreffen die konstruktive Realisierung der elektrischen Steuerung der Wellenleiter-Schaltmatrizen. Enthalten diese wenige Kaskadenstufen und wenige Schalterelemente, können die Steuerelektroden mit deren Anschlußleitungen planar in nur einer Schicht angeordnet werden.

Sind Steuerelektroden in größerer Zahl erforderlich, ist es vorteilhaft, diese planar in einer ersten Schicht und in einer höheren Schicht in Querrichtung verlaufende Anschlußleitungen vorzusehen. Elektroden, die gleichzeitig das gleiche Potential aufweisen können, lassen sich mit einer gemeinsamen Anschlußleitung verbinden.

In der Zeichnung sind Ausführungsformen der Erfindung schematisch dargestellt. Dabei zeigen:

Fig.1: je eine Wellenleiterzelle der beiden Grundtypen A und B;

Fig.2: das Prinzip einer aus den Grundtypen A und B aufgebauten vierstufigen Kaskade einer 4 x 4-Matrix;

Fig.3: eine Wellenleiter-4 x 4-Schaltmatrix mit zusätzlichen Prüfleitungen und Schalterelementen;

Fig.4: die Struktur der Ätzgruben im 4 x 4-Matrixfeld gemäß Fig. 3;

Fig.5: die Struktur der Schalterelektroden mit ihren Anschlußleitungen für die Schaltmatrix gemäß Fig. 3

und Fig.6: in Explosionsdarstellung den Aufbau eines elektrisch steuerbaren optischen Bauelements mit den Elektroden und Anschlußleitungen in mehreren Lagen.

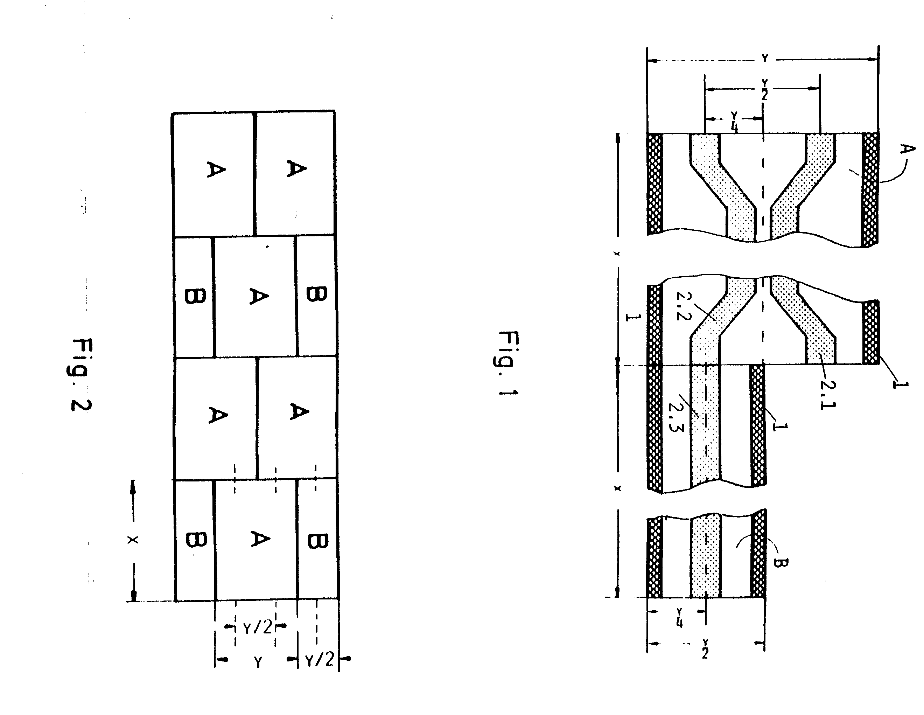

Die in Fig. 1 dargestellten beiden Grundtypen A und B von Wellenleiterzellen besitzen dieselbe Länge x und sind bezüglich ihrer Breite und der an den Querseiten befindlichen Wellenleiteranschlußstellen so konzipiert, daß derartige Zellen längs und quer unmittelbar aneinander gepackt werden können. Beide Grundtypen A und B sind an ihren Längsseiten mit Ätzgruben 1 versehen. Die Wellenleiter 2.1 und 2.2 im Schalterelement A haben an den Querseiten der Zellen den Abstand $y/2$ voneinander und $y/4$ von der Mittelachse. Der Wellenleiter 2.3 im Verbindungselement B verläuft geradlinig entlang der Mittelachse dieser Zelle. Da das Verbindungselement B mit $y/2$ nur halb so breit ist wie das Schalterelement A mit der Breite y, ergibt sich ein kontinuierlicher Übergang vom Wellenleiter 2.2 auf den Wellenleiter 2.3 und eine geradlinige, optisch beiderseits isolierte Weiterführung dieses Pfades. Auch die Ätzgruben 1 an den unteren Längsseiten der beiden Wellenleiterzellen A und B gehen kontinuierlich ineinander über.

Der Fig. 2 ist der prinzipielle Aufbau einer blockierungsfreien 4 x 4-Schaltmatrix aus Wellenleiterzellen A und B, gemäß Fig. 1, zu entnehmen. Alle Wellenleiter an den Querseiten der Matrix-Zellen haben denselben Abstand $y/2$ voneinander.

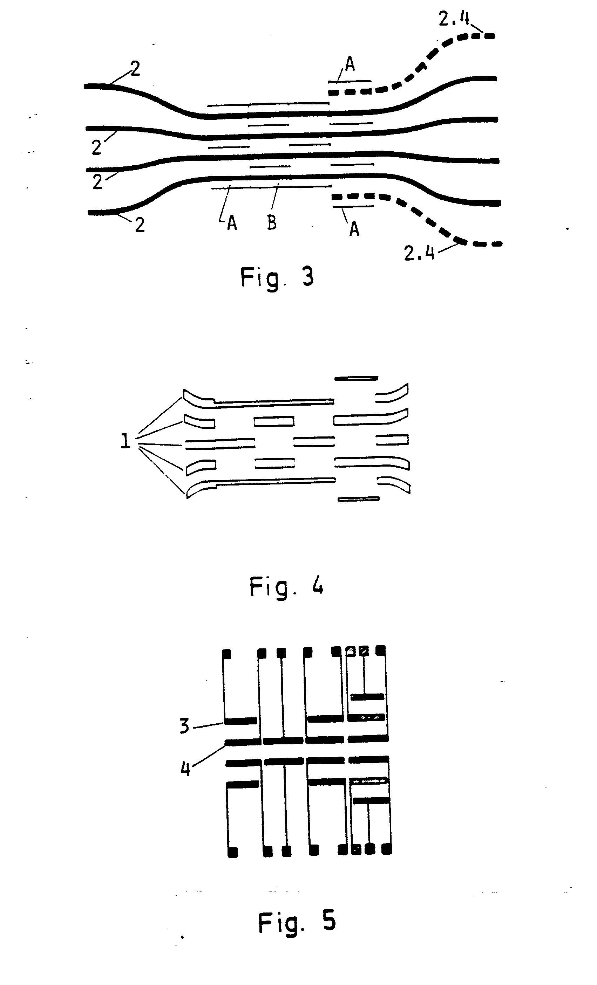

Die Fig. 3 zeigt den Aufbau einer Wellenleiter-Schaltmatrix mit den im Eingangs- und im Ausgangsbereich außerhalb des Matrixfeldes aufgespreizt verlaufenden Wel-

lenleitern 2. Außerhalb des Matrixfeldes mit den Wellenleiterzellen A und B sind für Prüfzwecke oder dergleichen noch zusätzliche Wellenleiter 2.4 vorgesehen, auf die sämtliche Eingänge der Matrix mittels der in der letzten Kaskadenstufe vorgesehenen, dort Verbindungselemente B ersetzenden, zusätzlichen Schalterelemente A durchgeschaltet werden können.

Fig. 4 zeigt die Struktur der Ätzgräben 1 für die Schaltmatrix gemäß Fig. 3, Fig. 5 die Struktur der zugehörigen Schalterelektroden 3 und 4 mit den entsprechenden Anschlußleitungen.

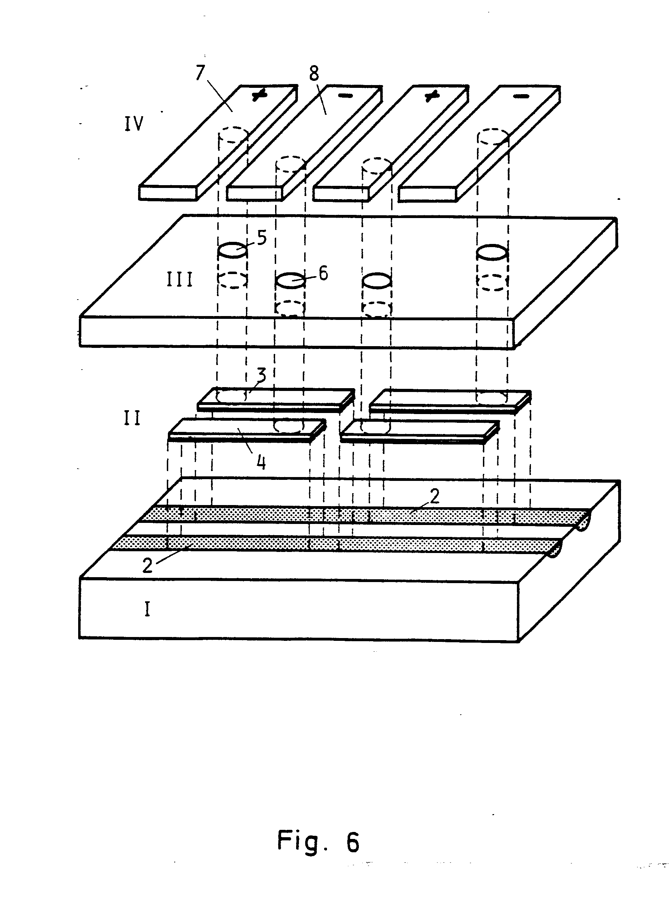

Der in Fig. 6 gezeigte mehrlagige Aufbau für die elektrische Steuerung eines optischen Wellenleiter-Bauelements ist der besseren Übersichtlichkeit halber in voneinander deutlich getrennten Ebenen dargestellt. Die Ebene I zeigt das Bauelement mit den Wellenleitern 2. Diese werden in einer Ebene II mit den betreffenden Elektroden 3 und 4 abgedeckt. In der Ebene III, einer Isolierschicht, sind Anschlußdurchführungen 5 und 6 für die Elektroden 3 und 4 angebracht. Quer zu den Wellenleitern 2 und den Elektroden 3 und 4 verlaufen in einer Ebene IV die Anschlußleitungen 7 und 8. Bei Kaskaden mit vielen Stufen und vielen Schalterelementen ermöglicht dieser Aufbau eine saubere und übersichtliche Trennung der einzelnen Anschlußleitungen.

HEINRICH-HERTZ-INSTITUT FÜR NACHRICHTENTECHNIK BERLIN
GMBH                                                   12/1283 EP


<u>Patentansprüche</u>

1. Wellenleiter-Schaltmatrix mit elektrisch steuerbaren, kaskadierten, integriert-optischen Schalterelementen, bei der die zu Monomodefaseranschlüssen führenden Wellenleiter im Eingangs- und im Ausgangsbereich der Matrix gespreizt, innerhalb eines Schalterelements eng nebeneinander und zwischen längsseitig benachbarten Schalterelementen voneinander entkoppelt verlaufen,
g e k e n n z e i c h n e t   d u r c h
eine Kaskade der Länge $n \cdot x$ und der Breite $m \cdot y$ in der Matrix, die aus zwei Grundtypen rechteckiger, unmittelbar aneinander gepackter Wellenleiterzellen aufgebaut ist, von denen:
- der eine Grundtyp (A) als ein Wellenleiter-Schalterelement mit der Länge x und der Breite y ausgebildet und an seinen Längsseiten mit optisch isolierenden Ätzgruben versehen ist, und die Wellenleiter an den Querseiten dieser Zelle den Abstand y/2 voneinander und y/4 von der Mittelachse haben, und
- der andere Grundtyp (B) als ein Ein-Wellenleiter-Verbindungselement mit der Länge x und der Breite y/2 ausgebildet und an seinen Längsseiten mit optisch isolierenden Ätzgruben versehen ist, und der Wellenleiter in dieser Zelle geradlinig entlang seiner Mittelachse verläuft.


2. Schaltmatrix nach Anspruch 1,
g e k e n n z e i c h n e t   d u r c h
ein als Richtkoppler ausgeführtes Wellenleiter-Schalterelement.

3. Schaltmatrix nach Anspruch 1,

g e k e n n z e i c h n e t   d u r c h

ein als Wellenleiterkreuzung ausgeführtes Wellenleiter-
Schalterelement.

4. Schaltmatrix nach Anspruch 1,

g e k e n n z e i c h n e t   d u r c h

ein als aktive optische Weiche (BOA = Bifurcation
Optique Active) ausgeführtes Wellenleiter-Schalterelement.

5. Schaltmatrix nach einem der Ansprüche 1 bis 4,

g e k e n n z e i c h n e t   d u r c h

optisch isolierende Ätzgruben im Eingangs- und im Ausgangsbereich der Matrix zwischen den dort gespreizt geführten Wellenleitern.

6. Schaltmatrix nach Anspruch 5,

g e k e n n z e i c h n e t   d u r c h

optisch isolierende Ätzgruben im Eingangs- und im Ausgangsbereich der Matrix, die sich entsprechend der
Spreizung der Wellenleiter verbreitern bzw. verjüngen.

7. Schaltmatrix nach einem der Ansprüche 1 bis 6,

g e k e n n z e i c h n e t   d u r c h

Wellenleiter, die außerhalb des Matrixfeldes mit den
kaskadierten Schalterelementen als Prüfleitungen für
die Matrix vorbeiführen.

8.Schaltmatrix nach Anspruch 7,

g e k e n n z e i c h n e t   d u r c h

ein Wellenleiter-Schalterelement, das an einen äußeren
Wellenleiter des Matrixfeldes und an einen außerhalb
des Matrixfeldes vorbeiführenden Wellenleiter angeschlossen ist.

9. Schaltmatrix nach einem der Ansprüche 1 bis 8,
g e k e n n z e i c h n e t   d u r c h
als Arbeitskontakte wirkende Wellenleiter-Schalterelemente in Wellenleiterbahnen außerhalb des Matrixfeldes im Bereich der gespreizt geführten Wellenleiter.

10. Schaltmatrix nach Anspruch 9,
g e k e n n z e i c h n e t   d u r c h
als Arbeitskontakte wirkende Wellenleiter-Schalterelemente nur im Ausgangsbereich der Schaltmatrix.

11. Schaltmatrix nach einem der Ansprüche 1 bis 10,
g e k e n n z e i c h n e t   d u r c h
kontinuierliche Übergänge zwischen Wellenleitern bzw.
Ätzgruben.

12. Schaltmatrix nach einem der Ansprüche 1 bis 11,
g e k e n n z e i c h n e t   d u r c h
Lithiumniobat($LiNbO_3$) als Wafermaterial.

13. Schaltmatrix nach einem der Ansprüche 1 bis 11,
g e k e n n z e i c h n e t   d u r c h
Wafermaterial aus dem System der III-V-Verbindungen,
insbesondere aus Indiumphosphid (InP).

14. Schaltmatrix nach einem der Ansprüche 1 bis 13,
g e k e n n z e i c h n e t   d u r c h
eine Breite der Wellenleiterbahnen von etw 5 µm und
ein Abstandsmaß y/2 von etwa 3 µm bis 6 µm an den
Querseiten der Zellen sowie eine Breite von 0,5 µm
bis 2 µm der optisch isolierenden Ätzgruben an den
Längsseiten der Zellen.

15. Schaltmatrix nach **Anspruch 2 und 14,**
g e k e n n z e i c h n e t   d u r c h
einen um 1 µm bis 2 µm geringeren Abstand der Wellenleiter im Koppelbereich des Wellenleiter-Schalterelements als an den Querseiten der Zelle.

16. Schaltmatrix nach einem der Ansprüche 1 bis 15,
g e k e n n z e i c h n e t   d u r c h
planar in nur einer Schicht angeordnete Steuerelektroden mit deren Anschlußleitungen für die Schalterelemente.

17. Schaltmatrix nach einem der Ansprüche 1 bis 15,
g e k e n n z e i c h n e t   d u r c h
planar in einer ersten Schicht angeordnete Steuerelektroden und in einer höheren Schicht in Querrichtung verlaufende Anschlußleitungen für die Schalterelemente.

Fig. 1

Fig. 2

Fig. 3

Fig. 4

Fig. 5

Fig. 6